# EUROPEAN PATENT APPLICATION

(11) **EP 4 733 926 A1**
(43) Date of publication of application: **29.04.2026**
(21) Application number: 25211658.7
(22) Date of filing: 28.10.2025
(51) Int. Cl.: G06F 3/12, G06K 15/02, G06V 30/413

(54) **DATA PROCESSING METHOD, ELECTRONIC DEVICE, AND STORAGE MEDIUM**

(30) Priority: 28.10.2024 CN 202411514763
(71) Applicant: Zhuhai Pantum Electronics Co., Ltd., Zhuhai, Guangdong 519055 (CN)
(72) Inventor: KUANG, Jinwen, Zhuhai, 519055 (CN); CHEN, Lilong, Zhuhai, 519055 (CN)
(74) Representative: Isarpatent

(57) **Abstract**

A data processing method includes: obtaining object attributes of a page to be processed, the object attributes including an object number and an object type, wherein the page to be processed is a page of a document in an image formation job; determining, based on the object number and the object type of the page to be processed, whether a source of the page to be processed is a first source or a second source, wherein the first source is a scanned document and the second source is a non-scanned document; and when the source of the page to be processed is the first source, optimizing the page to be processed according to a first optimization strategy that aligns with the first source.

## Description

### FIELD OF THE TECHNOLOGY

The present disclosure relates to a field of image forming technology, and in particular to a data processing method, apparatus, device, storage medium, and program product.

### BACKGROUND

An image forming apparatus forms images on recording media using the principles of imaging. Examples include printers, copiers, fax machines, multifunction image production and copying devices, xerographic printing devices, and any other similar devices. During the image forming process, users may use a terminal device (such as a mobile phone, tablet computer, or computer) to work with the image forming apparatus to complete the image forming task. In particular, the terminal device converts the document to be processed into image data that may be recognized by the image forming apparatus and transmits the image data to the image forming apparatus. After receiving the image data, the image forming apparatus executes the image forming task based on the image data.

In order to improve the image forming effect of the document, in the process of converting the document into image forming data that may be recognized by the image forming apparatus, the document to be subjected to the image forming operation may be optimized. For some documents with better quality, the optimization process may not be performed.

Before determining an optimization strategy (whether optimization is necessary and which algorithm should be used), the program may need to read all or a portion of the pixels in a document and use pixel features to determine the optimization strategy. However, reading and identifying each pixel individually often requires processing time. In certain scenarios, such as document printing, when users need to print a large number of documents in a short period of time, determining the optimization strategy based on pixel features requires a large amount of data processing, which may reduce document processing efficiency.

The information disclosed in the background technology section of the present disclosure is employed to facilitate the understanding of the general background technology of the present disclosure, and should not be regarded as an admission or any form of implication that the information constitutes any technology already known to those skilled in the technical field.

### SUMMARY

In a first aspect, the present disclosure provides a data processing method. The method includes: obtaining object attributes of a page to be processed, the object attributes including an object number and an object type, wherein the page to be processed is a page of a document in an image formation job; determining, based on the object number and the object type of the page to be processed, whether a source of the page to be processed is a first source or a second source, wherein the first source is a scanned document and the second source is a non-scanned document; and when the source of the page to be processed is the first source, optimizing the page to be processed according to a first optimization strategy that aligns with the first source.

In an alternative embodiment, the present disclosure further includes: when the source of the page to be processed is a second source, optimizing the page to be processed according to a second optimization strategy that aligns with the second source.

In an alternative embodiment, determining whether the source of the page to be processed is the first source or the second source based on the object number and object type on the page to be processed includes: when the object number on the page to be processed is 1 and the object type on the page to be processed is an image, determining that the source of the page to be processed is the first source; otherwise, determining that the source of the page to be processed is the second source.

In an alternative embodiment, the object attributes further include an object size, wherein when the object number on the page to be processed is 1 and the object type of the page to be processed is an image, determining that the source of the page to be processed is the first source; otherwise, determining that the source of the page to be processed is the second source, further includes: when the object number on the page to be processed is 1, the object type of the page to be processed is an image, and the object size of the page to be processed aligns with a frame size of the page to be processed, determining that the source of the page to be processed is the first source; otherwise, determining that the source of the page to be processed is the second source.

In an alternative embodiment, the object attributes further include an object resolution, and wherein when the object number on the page to be processed is 1 and the object type of the page to be processed is an image, determining that the source of the page to be processed is the first source; otherwise, determining that the source of the page to be processed is the second source, further includes: when the object number on the page to be processed is 1, the object type of the page to be processed is an image, and the object resolution of the page to be processed is greater than or equal to a preset resolution threshold, determining that the source of the page to be processed is the first source; otherwise, determining that the source of the page to be processed is the second source.

In an alternative embodiment, the object attributes further include an object size and an object resolution, and wherein when the object number on the page to be processed is 1 and the object type of the page to be processed is an image, determining that the source of the page to be processed is the first source; otherwise, determining that the source of the page to be processed is the second source, further includes: when the object number on the page to be processed is 1, the object type of the page to be processed is an image, the object size of the page to be processed aligns with the frame size of the page to be processed, and the object resolution of the page to be processed is greater than or equal to a preset resolution threshold, determining that the source of the page to be processed is the first source; otherwise, determining that the source of the page to be processed is the second source.

In an alternative embodiment, when the object number on the page to be processed is 1, the object type on the page to be processed is an image, the object size on the page to be processed aligns with the frame size of the page to be processed, and the object resolution on the page to be processed is greater than or equal to the preset resolution threshold, then determining that the source of the page to be processed is the first source; otherwise, determining that the source of the page to be processed is the second source, includes: determining whether the object number on the page to be processed is 1; when the object number on the page to be processed is 1, then determining whether the object type on the page to be processed is an image; otherwise, determining that the source of the page to be processed is the second source; when the object type on the page to be processed is an image, then determining whether the object size on the page to be processed aligns with the frame size of the page to be processed; otherwise, determining that the source of the page to be processed is the second source; when the object size of the page to be processed aligns with the frame size of the page to be processed, determining whether the object resolution of the page to be processed is greater than or equal to the preset resolution threshold; otherwise, the source of the page to be processed is determined to be the second source; and when the object resolution of the page to be processed is greater than or equal to the preset resolution threshold, determining the source of the page to be processed is the first source; otherwise, determining the source of the page to be processed is the second source.

In an alternative embodiment, obtaining the object attributes of the page to be processed includes: acquiring the object attributes of the page to be processed based on an initial file of the page to be processed, wherein the initial file of the page to be processed is a page description file.

In an alternative embodiment, obtaining the object attributes of the page to be processed includes: acquiring the object attributes of the page to be processed based on an intermediate file of the page to be processed, wherein the intermediate file of the page to be processed is an enhanced metafile.

In another aspect, the present disclosure provides a data processing method. The data processing method includes: optimizing each page of a document to be processed for an image formation job according to the aforementioned embodiments.

In a second aspect, the present disclosure provides an electronic device. The device includes: one or more processors and a memory storing computer program instructions that, when being executed, cause the one or more processors to perform: obtaining object attributes of a page to be processed, the object attributes including an object number and an object type, wherein the page to be processed is a page of a document in an image formation job; determining, based on the object number and the object type of the page to be processed, whether a source of the page to be processed is a first source or a second source, wherein the first source is a scanned document and the second source is a non-scanned document; and when the source of the page to be processed is the first source, optimizing the page to be processed according to a first optimization strategy that aligns with the first source.

In an alternative embodiment, the optimization module is further configured to optimize the page to be processed according to a second optimization strategy that aligns with the second source when the source of the page to be processed is a second source.

In an alternative embodiment, the optimization module is further configured to determine that the source of the page to be processed is the first source, when the object number on the page to be processed is 1 and the object type on the page to be processed is an image; or, the object number on the page to be processed is 1, the object type of the page to be processed is an image, the object attributes further include an object size, and the object size of the page to be processed aligns with a frame size of the page to be processed; or, the object number on the page to be processed is 1, the object type of the page to be processed is an image, the object attributes further include an object resolution, and the object resolution of the page to be processed is greater than or equal to a preset resolution threshold; or, the object number on the page to be processed is 1, the object type of the page to be processed is an image, the object attributes further include an object size and an object resolution, the object size of the page to be processed aligns with the frame size of the page to be processed, and the object resolution of the page to be processed is greater than or equal to a preset resolution threshold; otherwise, determining that the source of the page to be processed is the second source.

In an alternative embodiment, the object attributes further include an object size and an object resolution, the optimization module is further configured to: determine whether the object number on the page to be processed is 1; when the object number on the page to be processed is 1, then determine whether the object type on the page to be processed is an image; otherwise, determine that the source of the page to be processed is the second source; when the object type on the page to be processed is an image, then determine whether the object size on the page to be processed aligns with the frame size of the page to be processed; otherwise, determine that the source of the page to be processed is the second source; when the object size of the page to be processed aligns with the frame size of the page to be processed, determine whether the object resolution of the page to be processed is greater than or equal to the preset resolution threshold; otherwise, the source of the page to be processed is determined to be the second source; and when the object resolution of the page to be processed is greater than or equal to the preset resolution threshold, determine the source of the page to be processed is the first source; otherwise, determine the source of the page to be processed is the second source.

In an alternative embodiment, the acquisition module is further configured to: acquire the object attributes of the page to be processed based on an initial file or an intermediate file of the page to be processed, wherein the initial file of the page to be processed is a page description file, and wherein the intermediate file of the page to be processed is an enhanced metafile.

In a third aspect, the present disclosure provides a non-transitory computer-readable storage medium containing computer program instructions that when being executed, cause at least one processor to perform the method in the first aspect.

### BRIEF DESCRIPTION OF THE DRAWINGS

In order to illustrate the technical solutions of certain embodiments of the present disclosure, the following is a brief introduction to the drawings for use in certain embodiments. The drawings described below reflect certain embodiments of the present disclosure. Other drawings may be obtained based on these drawings without any creative work.
FIG. 1 is a schematic diagram of the structure of an image forming system provided in certain embodiments of the present disclosure.
FIG. 2 is a schematic diagram of a flow of a data processing method provided in certain embodiments of the present disclosure.
FIG. 3 is a schematic diagram of an implementation scenario provided in certain embodiments of the present disclosure.
FIG. 4 is a schematic diagram of an implementation scenario provided in certain embodiments of the present disclosure.
FIG. 5 is a schematic diagram of an implementation scenario provided in certain embodiments of the present disclosure.
FIG. 6 is a schematic diagram of a flow chart for identifying the source of pages to be processed, according to certain embodiments of the present disclosure.
FIG. 7 is a schematic diagram of a flow chart for a data processing method, according to certain embodiments of the present disclosure.
FIG. 8 is a block diagram of a data processing apparatus, according to certain embodiments of the present disclosure.
FIG. 9 is a schematic diagram of an electronic device, according to certain embodiments of the present disclosure.

### DETAILED DESCRIPTION

To better understand the technical solutions of the present disclosure, the following detailed description of certain embodiments of this application is provided with reference to the accompanying drawings.

Certain embodiments described herein represent only a portion of embodiments of the present disclosure, and not all of them. Other embodiments derived by persons of ordinary skill in the technical field based on certain embodiments of the present disclosure without inventive effort are to fall within the scope of protection of the present disclosure.

Terms used in certain embodiments of the present disclosure are for the purpose of describing certain embodiments only and are not intended to restrict the present disclosure. The singular forms "a", "an", and "the" used in certain embodiments of the present disclosure and the appended claims are to include plural forms unless the context clearly indicates otherwise.

The term "and/or" as used herein describes a relationship between associated objects, indicating that three possible relationships exist. For example, "A and/or B" may represent: A exists alone, A and B exist together, or B exists alone. Furthermore, the character "/" in certain embodiments of the present disclosure indicates that the associated objects are in an "or" relationship.

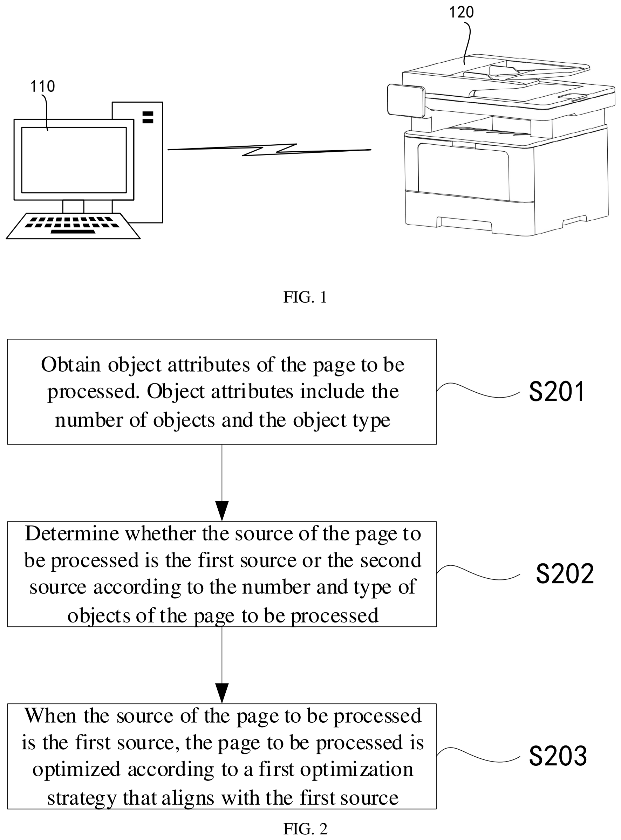

FIG. 1 is a structural diagram of an image forming system provided in certain embodiments of the present disclosure. As shown in FIG. 1, the image forming system includes: a terminal device 110 and an image forming apparatus 120. The terminal device 110 and the image forming apparatus 120 are interconnected through a wired or wireless communication network to transmit information. During the image formation process, the user may cooperate with the image forming apparatus 120 through the terminal device 110 to complete the image forming job. In certain embodiments, the terminal device 110 may convert the document for the image forming job to be executed into image forming data that may be recognized by the image forming apparatus 120, and send the image forming data to the image forming apparatus 120. After receiving the image forming data, the image forming apparatus 120 performs the image forming job based on the image forming data.

It should be noted that the terminal device 110 and image forming apparatus 120 shown in FIG. 1 are merely exemplary and should not be construed as limiting the scope of protection of the present disclosure. For example, the image forming apparatus 120 includes, but is not limited to, printers, copiers, fax machines, multi-function image production and copying devices, electrostatic printing devices, and any other similar devices; the terminal device 110 includes, but is not limited to, computers, mobile phones, tablet computers, in-house servers, cloud servers, and other electronic devices capable of communicating with the image forming apparatus 120.

To improve the image quality of a document, optimization processing may be performed on the document during the conversion of the document into image data recognizable by the image forming apparatus. In certain embodiments, optimization processing may be performed based on the document's characteristics. For example, when a document contains shadows, a shadow removal algorithm may be used to remove them. When the image in the document is dark, a brightness and/or contrast adjustment algorithm may be used to adjust the brightness and/or contrast of the document. Optimization processing may not be performed on certain high-quality documents. In certain embodiments, before determining an optimization strategy (whether optimization is necessary and which algorithm should be used), certain program may need to read all or a portion of the pixels in a document and use pixel features to determine the optimization strategy. However, reading and identifying each pixel individually often requires processing time. In certain scenarios, such as document printing, when users need to print a large number of documents in a short period of time, determining the optimization strategy based on pixel features may require a large amount of data processing, which may reduce document processing efficiency.

According to certain embodiments of the present disclosure, documents from different sources (formats) often have different characteristics. For example, some documents generated by the scanning function of an image forming apparatus may have image defects such as shadows, gray background, and noise. Therefore, these documents may require optimization processing to address these image defects. Some documents generated by text editing software, with clear text and neat layout, may not require optimization processing or may require optimization in other aspects. Therefore, the optimization strategy of the document may be determined by the source of the document. It may be understood that the data processing required to identify the source of the document is relatively small. Therefore, the data processing amount of determining the optimization strategy by the source of the document is relatively small, which may improve the document processing efficiency.

FIG. 2 is a flowchart illustrating a data processing method according to certain embodiments of the present disclosure. This method may be applied to the terminal device shown in FIG. 1, and as shown in FIG. 2. The method may include:
S201: Obtain object attributes of the page to be processed. Object attributes include the number of objects and the object type.

A document for which an image forming job is to be executed may include one page or multiple pages (for example, two, three, four, or the like). In certain embodiments of the present disclosure, the document for which an image forming job is to be executed is processed on a page-by-page basis. For ease of explanation, the page in the document currently requiring processing is referred to as a "page to be processed."

The page to be processed is a page in a document, and the content of the page to be processed includes one or more objects of the same or different types. The object attributes corresponding to scanned and non-scanned documents have different characteristics. Therefore, in certain embodiments of the present disclosure, the object attributes of the page to be processed may be obtained, and then in subsequent steps, the source of the page to be processed may be determined based on the object attributes of the page to be processed. In certain embodiments of the present disclosure, the object attributes include the number of objects and the object type. The object attributes may also include other types of information, which are explained below.

In certain embodiments, some image forming apparatuses often have a "Scan to PDF" function, which users typically use to scan paper documents into PDF format. Alternatively, terminal devices often have a "Convert to PDF" function, which users typically use to convert documents in other formats into PDF format. When an image forming job needs to be performed, the image forming job is performed using the PDF format document. In other words, in this application scenario, the document in the image forming job to be executed is a PDF format document. PDF is a page description file, in which object attributes may be directly obtained based on page description instructions. Therefore, when the document for the image forming job to be executed is a page description file, the object attributes of the page to be processed may be directly obtained based on the initial file of the page to be processed. The initial file of the page to be processed refers to the original document corresponding to the page to be processed, for example, in one embodiment it may be a page description file. In addition to PDF, there may be page description files in other formats, such as PS, PCL, or the like, and certain embodiments of the present disclosure do not impose particular restrictions on this.

In certain embodiments, the page to be processed may not be a page description file, and the object attributes of the page to be processed may not be directly obtained from the initial file of the page to be processed. However, when the terminal device converts the page to be processed into image forming data that may be recognized by the image forming apparatus, the terminal device may need to call the Graphics Device Interface (GDI). This process generates an intermediate file containing object attributes. Therefore, when the document for the image formation job to be executed is not a page description file, the object attributes of the page to be processed may be obtained from the intermediate file of the page to be processed. The intermediate file may be a file generated during the parsing or format conversion process of the page to be processed. In certain embodiments, the intermediate file may be an Enhanced Metafile (EMF), and object attributes may be obtained based on the EMF file corresponding to the page to be processed. In certain embodiments, the corresponding object attributes may be determined based on the EMF file of the image forming job. For example, when folder A is used to temporarily store intermediate files generated by job A', the number of images contained in job A' may be determined by traversing the number of EMF files in the folder. In addition to intermediate files in EMF format, intermediate files containing object numbers in other formats may also exist, and the present disclosure does not impose particular restrictions on this.

S202: Determine whether the source of the page to be processed is the first source or the second source according to the number and type of objects of the page to be processed.

For ease of explanation, in certain embodiments of the present disclosure, the sources of the pages to be processed are divided into a "first source" and a "second source." The first source is a scanned document, and the second source is a non-scanned document. In other words, whether the source of the page to be processed is a scanned document or a non-scanned document is determined based on the number and type of objects on the page to be processed.

By analyzing the number and type of objects in the scanned and non-scanned copies, it may be determined that: the content of a page corresponding to the scanned document consists of one image object; the content of a page corresponding to the non-scanned document consists of one text object, or multiple text objects, or multiple image objects, or one or more text objects and one or more image objects. Based on the above characteristics of scanned and non-scanned copies, a first judgment condition may be set: the number of objects on the page to be processed is 1, and the object type of the page to be processed is an image. When the first judgment condition is met, the source of the page to be processed is determined to be the first source, that is, the scanned document; otherwise, the source of the page to be processed is determined to be the second source, that is, the non-scanned document. One technical effect of the above method is that the use of a non-pixel method to identify the source of the page to be processed may significantly improve the recognition speed. This is because the existing technology usually uses pixel features to determine whether an image is a digital image generated by a computer or a scan obtained by scanning a paper original. For example, some existing technologies may determine whether it is a scanned document by identifying whether there are shadows in the image. However, this identification process requires traversing multiple pixels in the image and identifying through features such as pixel values and pixel positions. The amount of data to be processed is large, so it takes a long time, which reduces the user's productivity when using the printer. However, certain embodiments of the present disclosure use a non-pixel method such as the number of objects and object types to identify the source of the page to be processed. There is no need to traverse the pixels in the image. This is because the number of objects and the type of objects may be quickly obtained through the initial file or intermediate file. For example, for PDF files, the number of page objects and the type of page objects are attribute information of the PDF and may be directly obtained. Therefore, pixel processing may be avoided, which helps to improve processing efficiency.

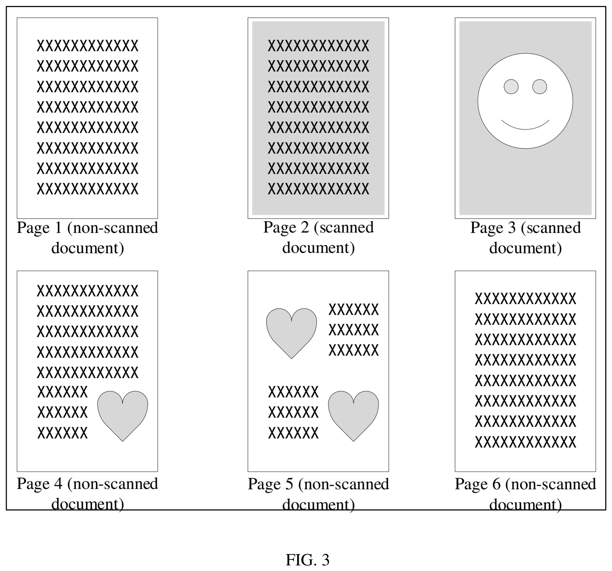

For example, in the implementation scenario shown in FIG. 3, the number of objects on page 1 is 1, and its object type is text, which does not meet the first judgment condition. In this scenario, the source of page 1 is determined to be the second source, for example, a non-scanned document. The number of objects on page 2 is 1, and its object type is an image, which meets the first judgment condition. In this scenario, the source of page 2 is determined to be the first source, for example, a scanned document. The number of objects on page 3 is 1, and its object type is an image, which meets the first judgment condition. In this scenario, the source of page 3 is determined to be the first source, for example, a scanned document. The number of objects on page 4 is 2, and its object type includes text and an image. This does not meet the first judgment condition. In this scenario, the source of page 4 is determined to be the second source, for example, a non-scanned document. The number of objects on page 5 is 4, and its object types include text and pictures. When the first judgment condition is not met, it is determined that the source of page 5 is the second source, that is, it is a non-scanned document. The number of objects on page 6 is 1, and its object type is text. When the first judgment condition is not met, it is determined that the source of page 6 is the second source, that is, it is a non-scanned document. In the example of FIG. 3, the continuous shaded area on the page represents an image. Although the content presented on page 2 is text, it is text in an image, that is, it is essentially still an image. This type of page is particularly common in the implementation scenario of scanning text documents into PDF format files.

In certain embodiments, a determination is first made as to whether the number of objects on the page to be processed is 1. When not, the object type of the page to be processed is not identified, and the page is directly determined to be a non-scanned document. When the number of objects on the page to be processed is 1, a further determination is made as to whether the page to be processed is an image. When the page to be processed is an image, the page to be processed is determined to be a scanned document; when the page to be processed is not an image, the page to be processed is determined to be a non-scanned document. Because the number of objects is easier to determine than the object type, determining the object number first and then determining the object type when the number meets the preset determination criteria may reduce the amount of data processing.

In certain embodiments, the accuracy of the judgment may be further improved. By comparing scanned and non-scanned documents, it is found that the size of images inserted into a page by text editing software typically does not match the page's frame size (also known as canvas size, such as A3, A4, or the like); conversely, the size of images in scanned documents often aligns with the page's frame size. Therefore, based on the "comparison results of image size and frame size," scanned and non-scanned documents may be further distinguished. In certain embodiments, the object attributes obtained in S201 also include the object size, and a second judgment condition is set: the object size of the page to be processed aligns with the frame size of the page to be processed. If both the first and second judgment conditions are met, the source of the page to be processed is determined to be the first source, for example, a scanned document; otherwise, the source of the page to be processed is determined to be the second source, for example, a non-scanned document. That is, when the number of objects on the page to be processed is 1, the object type of the page to be processed is an image, and the object size of the page to be processed aligns with the frame size of the page to be processed, the source of the page to be processed is determined to be the first source; otherwise, the source of the page to be processed is determined to be the second source. The object size is the image size, which may be obtained based on the image attributes; the frame size is the page size of the page to be processed, which may be obtained based on the page attributes. For example, when the page size of the first page of a PDF file to be processed is M×N, and the first page contains an image with a size of X×Y, then the object size is X×Y, and the frame size is M×N.

When the first judgment condition is not met, there is no need to judge the second judgment condition. Therefore, in certain embodiments, it is possible to first determine whether the first judgment condition is met. When the first judgment condition is met, it is further determined whether the second judgment condition is met, which may reduce the amount of data processing.

In certain embodiments, the object size and the image size include two parameters: width and height. By comparing the width and height of the object and the image, it may be determined whether the object size of the page to be processed aligns with the image size of the page to be processed, that is, whether the second judgment condition is met. In certain embodiments, a width difference threshold and a height difference threshold are set. When the difference between the width of the object of the page to be processed and the width of the frame of the page to be processed is less than or equal to the width difference threshold, and the difference between the height of the object of the page to be processed and the height of the frame of the page to be processed is less than or equal to the height difference threshold, then it is determined that the object size of the page to be processed aligns with the frame size of the page to be processed; otherwise, it is determined that the object size of the page to be processed does not align with the frame size of the page to be processed. The width difference threshold and the height difference threshold may be set according to implementation needs, and the present disclosure does not impose particular restrictions on this.

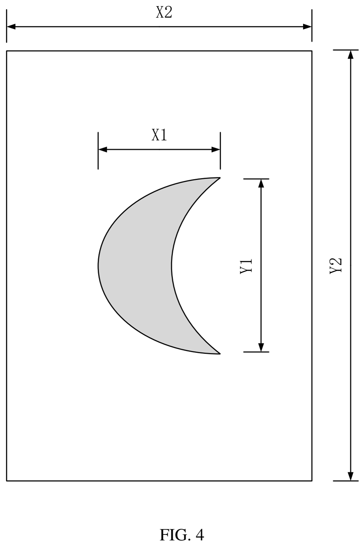

For example, in the implementation scenario shown in FIG. 4, the page to be processed is a non-scanned document, where the page to be processed includes an image object. The width of the image object on the page to be processed is X1, and the height is Y1; the width of the frame size of the page to be processed is X2, and the height is Y2. In addition, a width difference threshold ΔX and a height difference threshold ΔY are set. By comparison, it is determined that |X2-X1|>ΔX and |Y2-Y1|>ΔY, indicating that the object size of the page to be processed does align with the frame size of the page to be processed, and the second judgment condition is not met.

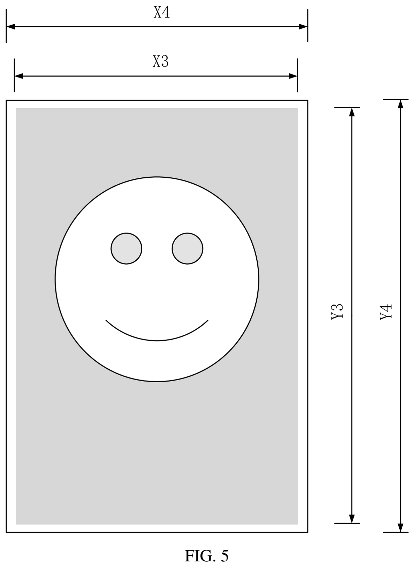

For example, in the implementation scenario shown in FIG. 5, the page to be processed is a scanned document, which includes an image object. The image object on the page to be processed has a width of X3 and a height of Y3; the frame of the page to be processed has a width of X4 and a height of Y4. In addition, a width difference threshold ΔX and a height difference threshold ΔY are set. By comparison, it is determined that |X4 - X3| < ΔX and |Y4 - Y3| < ΔY, indicating that the object size of the page to be processed aligns with the frame size of the page to be processed, thus satisfying the second judgment condition.

In certain embodiments, by comparing scanned and non-scanned documents, it may be found that the resolution of image objects in scanned documents is generally higher, for example, 300dpi; the resolution of image objects in non-scanned documents is generally lower. Therefore, the object resolution of the page to be processed may be compared with a preset resolution threshold, and the scanned and non-scanned documents may be further distinguished based on the comparison results. The object attributes acquired in S201 also include the object resolution, and a third judgment condition is set: the object resolution of the page to be processed is greater than or equal to the preset resolution threshold. When both the first and third judgment conditions are met, the source of the page to be processed is determined to be the first source, for example, a scanned document; otherwise, the source of the page to be processed is determined to be the second source, for example, a non-scanned document. In other words, when the number of objects on the page to be processed is 1, the object type of the page to be processed is an image, and the object resolution of the page to be processed is greater than or equal to a preset resolution threshold, the source of the page to be processed is determined to be the first source; otherwise, the source of the page to be processed is determined to be the second source. The resolution threshold may be set according to implementation needs, for example, 200dpi, 300dpi, or the like, and the present disclosure do not impose particular restrictions on this.

When the first judgment condition is not met, there is no need to judge the third judgment condition. Therefore, in an implementation, it is possible to first determine whether the first judgment condition is met. When the first judgment condition is met, it is further determined whether the third judgment condition is met, which may reduce the amount of data processing.

In an implementation, the source of the page to be processed may be comprehensively determined by combining the first, second, and third judgment conditions. The object attributes acquired in S201 also include object size and object resolution. When the first, second, and third judgment conditions are met, the source of the page to be processed is determined to be the first source, for example, a scanned document. Otherwise, the source of the page to be processed is determined to be the second source, for example, a non-scanned document. In certain embodiments, when the number of objects on the page to be processed is 1, the object type on the page to be processed is an image, the object size on the page to be processed aligns with the frame size of the page to be processed, and the object resolution on the page to be processed is greater than or equal to a preset resolution threshold, then the source of the page to be processed is determined to be the first source; otherwise, the source of the page to be processed is determined to be the second source. Combining the first, second, and third judgment conditions to determine the source of the page to be processed may improve the accuracy of the judgment result.

In an implementation, it is possible to first determine whether the first judgment condition is met, and when the first judgment condition is met, further determine whether the second judgment condition is met, and when the second judgment condition is met, further determine whether the third judgment condition is met. Alternatively, it is possible to first determine whether the first judgment condition is met, and when the first judgment condition is met, further determine whether the third judgment condition is met, and when the third judgment condition is met, further determine whether the second judgment condition is met.

In certain embodiments, the first judgment condition, the second judgment condition and the third judgment condition align with the characteristics of the scanned document, the source of the page to be processed is identified through the first judgment condition, the second judgment condition and the third judgment condition, and the recognition accuracy is relatively high.

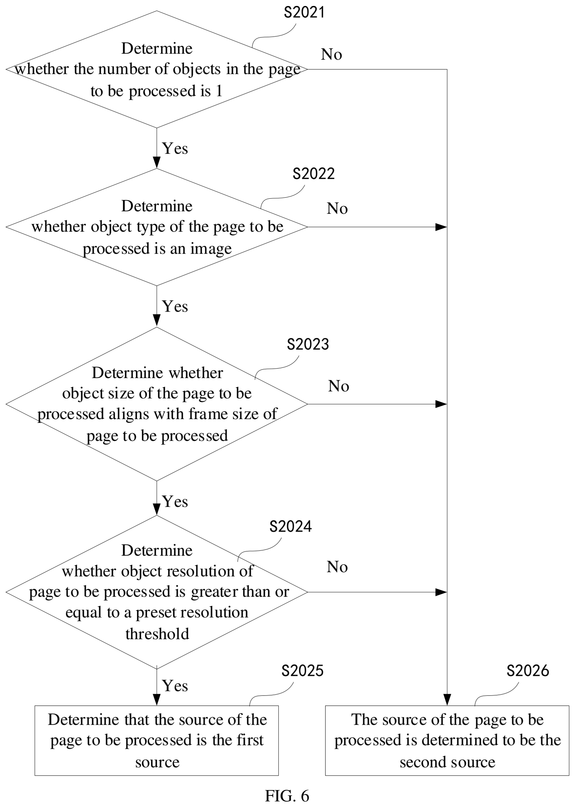

FIG. 6 is a flow chart illustrating the source of page to be processed, as provided in certain embodiments of the present disclosure. As shown in FIG. 6, the process includes:

S2021: Determine whether the number of objects in the page to be processed is 1.

The number of objects on the page to be processed is obtained. When the number of objects on the page to be processed is 1, it meets the scanned document determination criteria, and the process proceeds to S2022 for further determination. Otherwise, the process jumps to S2026 to determine whether the page to be processed is a non-scanned document.

S2022: Determine whether the object type of the page to be processed is an image.

When the number of objects on the page to be processed is 1, the object type of the page to be processed is further obtained. When the object type of the page to be processed is an image, indicating that it meets the criteria for a scanned document, the process proceeds to S2023 for further determination. Otherwise, the process jumps to S2026 to determine whether the page to be processed is a non-scanned document.

S2023: Determine whether the object size of the page to be processed aligns with the frame size of the page to be processed.

When the object type of the page to be processed is an image, the object size and the image size of the page to be processed are further obtained. When the object size of the page to be processed aligns with the frame size of the page to be processed, indicating that the condition for the scanned document is met, the process proceeds to S2024 for further determination. Otherwise, the process jumps to S2026 to determine whether the page to be processed is a non-scanned document.

S2024: Determine whether the object resolution of the page to be processed is greater than or equal to a preset resolution threshold.

When the object size of the page to be processed aligns with the image size of the page to be processed, the object resolution of the page to be processed is further obtained. When the object resolution of the page to be processed is greater than or equal to a preset resolution threshold, the process proceeds to S2025 to determine that the page to be processed is a scanned document. Otherwise, the process jumps to S2026 to determine that the page to be processed is a non-scanned document.

S2025: Determine that the source of the page to be processed is the first source.

In certain embodiments, when the judgment conditions of steps S2021-S2024 are met, the source of the page to be processed is determined to be the first source, for example, a scanned document.

S2026: The source of the page to be processed is determined to be the second source.

In certain embodiments, when any of S2021-S2024 is not met, the source of the page to be processed is determined to be the second source, for example, a non-scanned document.

The execution order of S2021-S2024 may be adjusted as needed, and the present disclosure does not impose any particular restrictions on this.

S203: When the source of the page to be processed is the first source, the page to be processed is optimized according to a first optimization strategy that aligns with the first source.

In certain embodiments of the present disclosure, the first optimization strategy is an optimization strategy that aligns with a scanned document. When the page to be processed is determined to be a scanned document, the page to be processed is optimized according to the first optimization strategy that aligns with the scanned document. For example, a document formed by the scanning function of an image forming apparatus may contain image defects such as shadows, gray background, and noise. Therefore, the first optimization strategy may include an algorithm for optimizing image defects such as shadows, gray background, and noise. The first optimization strategy may be adjusted based on implementation needs, and the present disclosure does not impose particular restrictions on this. It is understood that "optimizing the page to be processed according to the first optimization strategy that aligns with the first source" may be executed by a print driver installed on the computer or by a firmware program within the printer.

In certain embodiments of the present disclosure, there is no need to analyze the pixel features of the document, and the required data processing volume is relatively small, thereby improving the efficiency of identifying the document source. Based on this, a corresponding optimization strategy is further determined based on the identified document source, so that optimization algorithms such as shadow removal, gray background removal, or noise removal may be executed on the scanned document. The optimization algorithms is not executed on non-scanned documents, or a different optimization algorithm is executed on non-scanned documents to avoid performing the same optimization on all images without distinguishing their source, which would lead to reduced efficiency. This may further reduce unnecessary processing steps and further improve document processing efficiency.

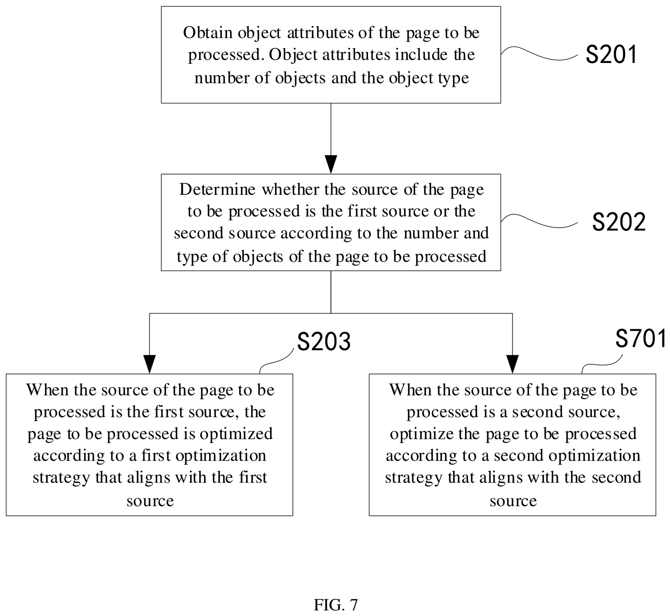

FIG. 7 is a flow chart illustrating a data processing method provided in certain embodiments of the present disclosure. As shown in FIG. 7, and further in view of FIG. 2, the method includes:

S701: When the source of the page to be processed is a second source, optimize the page to be processed according to a second optimization strategy that aligns with the second source.

In certain embodiments of the present disclosure, the second optimization strategy is an optimization strategy that aligns with non-scanned documents. When the page to be processed is determined to be a non-scanned document, the page to be processed is optimized according to the second optimization strategy that aligns with non-scanned documents. The second optimization strategy may be set based on implementation needs, and the present disclosure does not impose particular restrictions on this. It is understood that "optimizing the page to be processed according to the second optimization strategy that aligns with non-scanned documents" may be executed by a print driver installed on the computer or by a firmware program within the printer.

In certain embodiments, since non-scanned documents (such as documents generated by text editing software) have clear text and neat layout, it may not be necessary to perform optimization processing to achieve an acceptable image formation effect for such documents. Therefore, when it is determined that the page to be processed is a non-scanned document, the page to be processed is not optimized, that is, S701 is not executed. In certain embodiments, a different second optimization strategy may also be executed when it is determined that the page to be processed is a non-scanned document. For example, for documents generated by text editing software, an ink saving process may be performed. This is because ink-saving processing usually replaces certain black pixels with white pixels according to preset rules to achieve the effect of saving ink. Documents generated by text editing software are clear enough. Performing ink-saving processing on such documents is not likely to cause the text or pictures in the document to be less recognizable, and it may also achieve the effect of saving toner consumption. Therefore, certain embodiments of the present disclosure may not only improve the optimization processing efficiency of scanned documents, but also save toner usage for non-scanned documents. Alternatively, when determining that the page to be processed is a non-scanned document, it is also possible to additionally determine whether the non-scanned document is clear. When it is clear, there is no need to perform optimization processing. When it is not clear, optimization processing may be performed. Clarity determination may use any suitable clarity recognition algorithm.

In certain embodiments, when a document includes multiple pages, these pages may have different sources (scanned and non-scanned). For example, in the implementation scenario shown in FIG. 3, the document for the image formation job to be performed includes a total of 6 pages, of which pages 1, 4, 5, and 6 are non-scanned, and pages 2 and 3 are scanned. For this document, when the optimization strategy corresponding to the scanned document is used to optimize the document, then the image processing effect for the non-scanned document in the document may be poor, thereby affecting the overall image formation effect of the document; when the optimization strategy corresponding to the non-scanned document is used to optimize the document, then the image processing effect for the scanned document in the document may be poor, thereby affecting the overall image formation effect of the document.

Based on this, in certain embodiments of the present disclosure, when the document for which the image formation job is to be performed includes multiple pages, each page is processed in turn using the method shown in FIG. 2 or FIG. 7 on a page-by-page basis, thereby achieving differentiated optimization processing of pages from different sources in the same document, thereby improving the overall image formation effect of the document. Furthermore, certain embodiments of the present disclosure may automatically complete the execution process of document source identification and optimizing the processing type based on the source without user intervention, thereby reducing the user's operational burden, improving the user's productivity when using the printer, and helping to enhance the user experience. For the data processing method of each page, please refer to the description of the above embodiments, and for the sake of brevity, it will not be repeated here.

Corresponding to the above-mentioned embodiments, the present disclosure also provides a data processing apparatus.

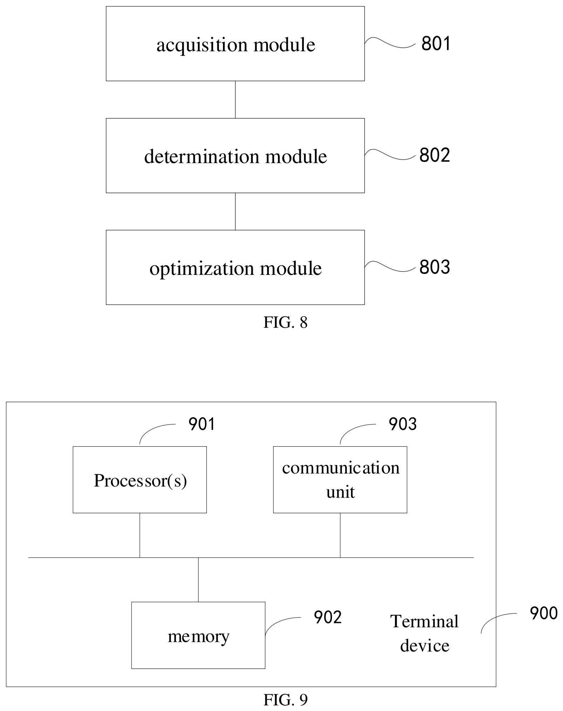

FIG. 8 is a block diagram of the structure of a data processing apparatus provided in certain embodiments of the present disclosure. This apparatus may be applied to the terminal device shown in FIG. 1. As shown in FIG. 8, it includes the following modules.

The acquisition module 801 is configured to obtain object attributes of a page to be processed, including the object number and object type. The page to be processed is a page in a document to be subjected to an image formation job.

The determination module 802 is configured to determine, based on the object number and object type of the page to be processed, whether the source of the page to be processed is a first source or a second source, where the first source is a scanned document and the second source is a non-scanned document.

Optimization module 803 is configured to optimize the page to be processed according to a first optimization strategy that aligns with the first source, when the source of the page to be processed is a first source.

In certain embodiments of the present disclosure, the optimization strategy for a document is determined based on its source, eliminating the need to analyze the document's pixel features. This reduces the amount of data processing required, thereby improving document processing efficiency.

Details of the apparatus embodiments of this application may be found in the description of the aforementioned method embodiments. For the sake of brevity, these details will not be repeated here.

Corresponding to the aforementioned embodiments, certain embodiments of this application also provide an electronic device.

FIG. 9 is a schematic diagram of the structure of an electronic device provided in certain embodiments of the present disclosure. As shown in FIG. 9, the electronic device 900 may include: a processor 901, a memory 902, and a communication unit 903. These components communicate via one or more buses. The electronic device structure shown in the figure does not constitute a restriction on certain embodiments of the present disclosure. It may be a bus structure or a star structure, and may also include more or fewer components than shown, certain components may be combined, or the components may be arranged differently.

The communication unit 903 is used to establish a communication channel so that the electronic device may communicate with other devices.

The processor 901 is the control center of the electronic device. It uses various interfaces and lines to connect various parts of the entire electronic device. It runs or executes software programs and/or modules stored in the memory 902, and calls data stored in the memory to perform various functions of the electronic device and/or process data. The processor may include an integrated circuit (IC), for example, it may include a single packaged IC, or it may include multiple packaged ICs with the same or different functions. For example, the processor 901 may include only a central processing unit (CPU). In certain embodiments of the present disclosure, the CPU may be a single computing core or multiple computing cores.

The memory 902 is used to store execution instructions of the processor 901. The memory 902 may be implemented by any type of volatile or non-volatile storage device or a combination thereof, such as static random access memory (SRAM), electrically erasable programmable read-only memory (EEPROM), erasable programmable read-only memory (EPROM), programmable read-only memory (PROM), read-only memory (ROM), magnetic memory, flash memory, magnetic disk or optical disk.

When the execution instructions in the memory 902 are executed by the processor 901, the electronic device 900 is enabled to execute part or all of the steps in the above method embodiments.

Certain embodiments of the present disclosure further provide a computer-readable storage medium, where the computer-readable storage medium may store a program. When the program is executed, the program may control the device containing the computer-readable storage medium to execute some or all of the steps of the above method embodiments. In an implementation, the computer-readable storage medium may be a magnetic disk, an optical disk, a read-only memory (ROM), or a random access memory (RAM).

Certain embodiments of the present disclosure further provide a computer program product, which includes executable instructions. When the executable instructions are executed on a computer, the computer executes some or all of the steps in the above method embodiment.

In certain embodiments of the present disclosure, "at least one" refers to one or more, and "more" refers to two or more. "And/or" describes the association relationship of associated objects, indicating that three relationships may exist. For example, A and/or B may represent the existence of A alone, the existence of A and B at the same time, and the existence of B alone. Among them, A and B may be singular or plural. The character "/" generally indicates that the previous and subsequent associated objects are in an "or" relationship. "At least one of the following" and similar expressions refer to any combination of these items, including any combination of single or plural items. For example, at least one of a, b and c may be represented by: a, b, c, a-b, a-c, b-c, or a-b-c, where a, b, c may be single or multiple.

Various units and algorithm steps described in certain embodiments disclosed herein may be implemented using a combination of electronic hardware, computer software, and electronic hardware. Whether these functions are performed in hardware or software depends on the implementation and design details of the technical solution. Professionals and technicians may use different methods to implement the described functions for each implementation, and such implementation is considered within the scope of this application.

For brevity of description, description of the working processes of the systems, devices and units may be found in the aforementioned method embodiments and will not be repeated here.

In certain embodiments of the present disclosure, when any function is implemented in the form of a software functional unit and sold or used as an independent product, it may be stored in a computer-readable storage medium. Based on this understanding, the technical solution of the present disclosure may be embodied in the form of a software product. The computer software product is stored in a storage medium and includes several instructions for enabling a computer device (which may be a personal computer, server, or network device, or the like) to execute all or part of the steps of the method described herein. The aforementioned storage medium includes: U disk, mobile hard disk, read-only memory (ROM), random access memory (RAM), disk or optical disk, and other media that may store program code.

The above description reflects certain embodiments of the present disclosure. Any person skilled in the technical field may readily conceive of variations or substitutions within the technical scope disclosed in the present disclosure, and such variations or substitutions are considered within the scope of protection of the present disclosure. The scope of protection of the present disclosure is subject to the scope of protection of the claims.

## Claims

1. A data processing method, comprising:
obtaining object attributes of a page to be processed, the object attributes including an object number and an object type, wherein the page to be processed is a page of a document in an image formation job;
determining, based on the object number and the object type of the page to be processed, whether a source of the page to be processed is a first source or a second source, wherein the first source is a scanned document and the second source is a non-scanned document; and
when the source of the page to be processed is the first source, optimizing the page to be processed according to a first optimization strategy that aligns with the first source.

2. The method of claim 1, further comprising:
when the source of the page to be processed is a second source, optimizing the page to be processed according to a second optimization strategy that aligns with the second source.

3. The method of claim 1, wherein determining whether the source of the page to be processed is the first source or the second source based on the object number and object type on the page to be processed comprises:
when the object number on the page to be processed is 1 and the object type on the page to be processed is an image, determining that the source of the page to be processed is the first source; otherwise, determining that the source of the page to be processed is the second source.

4. The method of claim 3, wherein the object attributes further comprise an object size, wherein when the object number on the page to be processed is 1 and the object type of the page to be processed is an image, determining that the source of the page to be processed is the first source; otherwise, determining that the source of the page to be processed is the second source, further comprises:
when the object number on the page to be processed is 1, the object type of the page to be processed is an image, and the object size of the page to be processed aligns with a frame size of the page to be processed, determining that the source of the page to be processed is the first source; otherwise, determining that the source of the page to be processed is the second source.

5. The method of claim 3, wherein the object attributes further comprise an object resolution, and wherein when the object number on the page to be processed is 1 and the object type of the page to be processed is an image, determining that the source of the page to be processed is the first source; otherwise, determining that the source of the page to be processed is the second source, further comprises:
when the object number on the page to be processed is 1, the object type of the page to be processed is an image, and the object resolution of the page to be processed is greater than or equal to a preset resolution threshold, determining that the source of the page to be processed is the first source; otherwise, determining that the source of the page to be processed is the second source.

6. The method of claim 3, wherein the object attributes further comprise an object size and an object resolution, and wherein when the object number on the page to be processed is 1 and the object type of the page to be processed is an image, determining that the source of the page to be processed is the first source; otherwise, determining that the source of the page to be processed is the second source, further comprises:
when the object number on the page to be processed is 1, the object type of the page to be processed is an image, the object size of the page to be processed aligns with the frame size of the page to be processed, and the object resolution of the page to be processed is greater than or equal to a preset resolution threshold, determining that the source of the page to be processed is the first source; otherwise, determining that the source of the page to be processed is the second source.

7. The method of claim 6, wherein when the object number on the page to be processed is 1, the object type on the page to be processed is an image, the object size on the page to be processed aligns with the frame size of the page to be processed, and the object resolution on the page to be processed is greater than or equal to the preset resolution threshold, then determining that the source of the page to be processed is the first source; otherwise, determining that the source of the page to be processed is the second source, comprises:
determining whether the object number on the page to be processed is 1;
when the object number on the page to be processed is 1, then determining whether the object type on the page to be processed is an image; otherwise, determining that the source of the page to be processed is the second source;
when the object type on the page to be processed is an image, then determining whether the object size on the page to be processed aligns with the frame size of the page to be processed; otherwise, determining that the source of the page to be processed is the second source;
when the object size of the page to be processed aligns with the frame size of the page to be processed, determining whether the object resolution of the page to be processed is greater than or equal to the preset resolution threshold; otherwise, the source of the page to be processed is determined to be the second source; and
when the object resolution of the page to be processed is greater than or equal to the preset resolution threshold, determining the source of the page to be processed is the first source; otherwise, determining the source of the page to be processed is the second source.

8. The method of claim 1, wherein obtaining the object attributes of the page to be processed comprises:
acquiring the object attributes of the page to be processed based on an initial file of the page to be processed, wherein the initial file of the page to be processed is a page description file.

9. The method of claim 1, wherein obtaining the object attributes of the page to be processed comprises:
acquiring the object attributes of the page to be processed based on an intermediate file of the page to be processed, wherein the intermediate file of the page to be processed is an enhanced metafile.

10. An electronic device comprising:
an acquisition module being configured to obtain object attributes of a page to be processed, the object attributes including an object number and an object type, wherein the page to be processed is a page of a document in an image formation job;
a determination module being configured to determine, based on the object number and the object type of the page to be processed, whether a source of the page to be processed is a first source or a second source, wherein the first source is a scanned document and the second source is a non-scanned document; and
an optimization module being configured to optimize the page to be processed according to a first optimization strategy that aligns with the first source when the source of the page to be processed is the first source.

11. The electronic device of claim 10, wherein:
the optimization module is further configured to optimize the page to be processed according to a second optimization strategy that aligns with the second source when the source of the page to be processed is a second source.

12. The electronic device of claim 10, wherein the optimization module is further configured to:
determine that the source of the page to be processed is the first source, when:
the object number on the page to be processed is 1 and the object type on the page to be processed is an image; or,
the object number on the page to be processed is 1, the object type of the page to be processed is an image, the object attributes further comprise an object size, and the object size of the page to be processed aligns with a frame size of the page to be processed; or,
the object number on the page to be processed is 1, the object type of the page to be processed is an image, the object attributes further comprise an object resolution, and the object resolution of the page to be processed is greater than or equal to a preset resolution threshold; or
the object number on the page to be processed is 1, the object type of the page to be processed is an image, the object attributes further comprise an object size and an object resolution, the object size of the page to be processed aligns with the frame size of the page to be processed, and the object resolution of the page to be processed is greater than or equal to a preset resolution threshold;
otherwise, determining that the source of the page to be processed is the second source.

13. The electronic device of claim 10, wherein the object attributes further comprise an object size and an object resolution, the optimization module is further configured to:
determine whether the object number on the page to be processed is 1;
when the object number on the page to be processed is 1, then determine whether the object type on the page to be processed is an image; otherwise, determine that the source of the page to be processed is the second source;
when the object type on the page to be processed is an image, then determine whether the object size on the page to be processed aligns with the frame size of the page to be processed; otherwise, determine that the source of the page to be processed is the second source;
when the object size of the page to be processed aligns with the frame size of the page to be processed, determine whether the object resolution of the page to be processed is greater than or equal to the preset resolution threshold; otherwise, the source of the page to be processed is determined to be the second source; and
when the object resolution of the page to be processed is greater than or equal to the preset resolution threshold, determine the source of the page to be processed is the first source; otherwise, determine the source of the page to be processed is the second source.

14. The electronic device of claim 10, wherein the acquisition module is further configured to:
acquire the object attributes of the page to be processed based on an initial file or an intermediate file of the page to be processed, wherein the initial file of the page to be processed is a page description file, and wherein the intermediate file of the page to be processed is an enhanced metafile.

15. A non-transitory computer-readable storage medium containing computer program instructions that when being executed, cause at least one processor to perform the method in any one of claims 1 to 9.
